# EUROPÄISCHE PATENTSCHRIFT

(11) **EP 3 148 680 B1**
(45) Veröffentlichungstag und Bekanntmachung des Hinweises auf die Patenterteilung: **28.02.2018**
(21) Anmeldenummer: 15717094.5
(22) Anmeldetag: 11.04.2015
(51) Int. Cl.: B01D 63/02

(54) **VERFAHREN ZUR HERSTELLUNG EINES HOHLFASERMODULS**
METHOD FOR PRODUCING A HOLLOW FIBRE MODULE
PROCÉDÉ DE FABRICATION D'UN MODULE À FIBRES CREUSES

(30) Priorität: 28.05.2014 DE 102014107583
(43) Veröffentlichungstag der Anmeldung: 05.04.2017
(73) Patentinhaber: Sartorius Stedim Biotech GmbH, 37079 Göttingen (DE)
(72) Erfinder: REQUATE, Wilhelm, 37308 Heiligenstadt (DE); HELLWIG, Gerid, 37127 Niemetal (DE); WORTMEYER, Johannes, 37085 Göttingen (DE); APELT, Ulrich, 37136 Ebergötzen (DE)
(74) Vertreter: Stehl, Astrid
(86) Internationale Anmeldenummer: PCT/EP2015/000766
(87) Internationale Veröffentlichungsnummer: WO 2015/180810

(56) Entgegenhaltungen:
- EP-A1- 1 820 559
- WO-A1-97/28953
- WO-A1-03/051495
- WO-A1-2005/046847
- GB-A- 1 379 511
- JP-A- H02 214 527
- US-A1- 2004 129 637
- US-A1- 2013 149 634

## Beschreibung

### Gebiet der Erfindung

Die Erfindung betrifft ein Verfahren zur Herstellung eines Hohlfasermoduls, bei dem in einem ersten Schritt ein Hohlfaserbündel in ein Modulgehäuse eingesetzt und mindestens ein Ende des Modulgehäuses durch eine Kappe verschlossen wird, bei dem in einem zweiten Schritt eine einen Abstandshalter bildende flüssige erste Komponente, die einen festen Zustand einnehmen kann, über einen ersten Zufluss in einen zwischen den Hohlfaserenden und der Kappe angeordneten Zwischenraum eingefüllt wird, wobei die Hohlfaserenden in die erste Komponente eintauchen, und bei dem in einem dritten Schritt eine flüssige, aushärtbare zweite Komponente der ersten Komponente von der Kappe weggerichtet über einen zweiten Zufluss vorgelagert wird, wobei die zweite Komponente im ausgehärteten Zustand eine dichtende Schicht bildet, die das Hohlfaserbündel einbettet und gegenüber der benachbarten Modulgehäusewandung abdichtet.

Die Erfindung betrifft weiterhin eine Kappe zur Verwendung als Angussdeckel in einem Verfahren zur Herstellung des Hohlfasermoduls. Die Kappe weist einen Angussdeckel mit einem umlaufenden Bund auf, der in das freie Ende eines Modulgehäuses einsetzbar ist und der im eingesetztem Zustand die freien Hohlfaserenden eines Hohlfaserbündels aufnimmt, wobei der Bund an seinem dem Hohlfaserbündel abgewandten Ende durch eine Stirnwandung verschlossen ist und wobei der Angussdeckel einen ersten Zufluss für eine einen Abstandshalter bildende flüssige erste Komponente aufweist.

### Stand der Technik

WO 03/051495 A1 offenbart ein Verfahren zur Herstellung von Hohlfasermodulen für Anwendungen im Hochtemperaturbereich zwischen 400 °C und 1200 °C. Bei der Herstellung werden die Hohlfasern in ein Gehäuse eingebracht, welches mit einer Angusskappe verschlossen wird. Vor dem Einbringen einer Vergussmasse für die Hohlfasern wird eine Verödungsmasse eingebracht, welche die Hohlfaserenden verschließt und welche nachfolgend zusammen mit der Angusskappe wieder entfernt wird.

JP H02 214527 A offenbart eine Angusskappe für Hohlfasermodule, welche durch eine tellerförmige Grundplatte und einen Bund zur Aufnahme der Hohlfaserenden begrenzt wird. Die tellerförmige Grundplatte weist kegelförmige Erhebungen mit Öffnungen auf, durch welche eine Vergussmasse in die Hohlfaserenden injiziert werden kann.

WO 2005/046847 A1 offenbart ein Verfahren zur Herstellung eines Kopfstücks mit einem Hohlfaserbündel aus endseitig offenen Hohlfasermembranen, wobei ein Ende des Faserbündels mit einer Verschlusssubstanz verschlossen wird. Zunächst wird in eine Gießform eine Bodenschicht eingebracht und darauf eine aushärtbare Dichtungsschicht aufgebracht. Danach werden die Hohlfasermembranen mit der verschlossenen Seite durch die Dichtungsschicht hindurch in die darunterliegende Bodenschicht gesteckt. Die Verschlusssubstanz und die Bodenschicht werden entfernt, nachdem die Dichtungsschicht zu einem Kopfstück ausgehärtet ist, in welchem die Hohlfasermembranen eingegossen sind.

Aus der WO 00/06357 A1 ist ein Verfahren zur Herstellung eines Hohlfasermoduls bekannt, bei dem in einem ersten Schritt ein Hohlfaserbündel in ein Modulgehäuse eingesetzt und mindestens ein Ende des Modulgehäuses durch eine Kappe verschlossen wird. In einem zweiten Schritt wird dabei eine einen Abstandshalter bildende flüssige erste Komponente, die auch einen festen Zustand einnehmen kann, über einen ersten Zufluss in einen zwischen den Hohlfaserenden und der Kappe angeordneten Zwischenraum eingefüllt, wobei die Hohlfaserenden in die erste Komponente eintauchen. In einem dritten Schritt wird eine flüssige, aushärtbare zweite Komponente der ersten Komponente von der Kappe weggerichtet über einen zweiten Zufluss vorgelagert. Die zweite Komponente bildet im ausgehärteten Zustand eine dichtende Schicht, die das Hohlfaserbündel einbettet und gegenüber der benachbarten Modulgehäusewandung abdichtet.

Nachteilig bei dem bekannten Verfahren ist, dass die Kappe ein integrierter Bestandteil ist und nicht wieder abgenommen werden kann. Die erste Komponente muss daher aus dem Hohlfasermodul wieder abgeführt werden. Soweit die erste Komponente verfestigt ist, muss sie mit einem Lösungsmittel oder durch Temperaturerhöhung wieder verflüssigt werden. Weiterhin nachteilig ist, dass nach dem Entfernen der ersten Komponente die Hohlfaserenden aus der von der zweiten Komponente gebildeten Schicht herausragen und ggf. abbrechen können. Zudem kann es auf der reinen Seite zu einer unerwünschten Verschmutzung kommen.

### Aufgabenstellung

Es ist die Aufgabe der vorliegenden Erfindung, ein Verfahren zur Herstellung eines Hohlfasermoduls anzugeben, das einerseits einfacher und kostengünstiger herzustellen ist und bei dem andererseits die Hohlfaserenden des Hohlfaserbündels gegen Abbrechen geschützt sind.

### Darlegung der Erfindung

Die Aufgabe bezüglich des Verfahrens wird in Verbindung mit den Merkmalen des Oberbegriffs von Anspruch 1 dadurch gelöst,
- dass die Kappe als ein entfernbarer Angussdeckel ausgebildet ist mit einem umlaufenden Bund, der in ein freies Ende des Modulgehäuses einsetzbar ist und der im eingesetztem Zustand die freien Hohlfaserenden des Hohlfaserbündels aufnimmt,
   wobei der Bund an seinem dem Hohlfaserbündel abgewandten Ende durch eine Stirnwandung verschlossen ist,
   wobei der Angussdeckel den ersten Zufluss für die erste flüssige Komponente aufweist und
   wobei der umlaufende Bund auf seiner dem Hohlfaserbündel zugewandten Innenfläche eine Profilierung oder Widerstandselemente aufweist,
   welche mit der ersten Komponente nach deren Verfestigung eine formschlüssige Verbindung bildet bzw. bilden, so dass sich ein in dem Angussdeckel gebildeter Pfropfen nicht gegenüber dem Angussdeckel verdrehen kann, und
- dass nach dem Aushärten der zweiten Komponente die Kappe, einschließlich der den verfestigten Pfropfen bildenden ersten Komponente und den in dem Pfropfen eingebetteten Hohlfaserenden, die aus der Stirnfläche der von der zweiten Komponente gebildeten Schicht herausragen, in einer rotierend ziehenden Bewegung aus dem Modulgehäuse entfernt wird, wobei bei dem Entfernen des Angussdeckels die Hohlfasern in der von der ersten Komponente und der zweiten Komponente gebildeten Grenzschicht durchtrennt werden.

Durch die Entfernung der als Angussdeckel ausgebildeten Kappe einschließlich der einen verfestigten Pfropfen bildenden ersten Komponente mit den in dem Pfropfen eingebetteten Hohlfaserenden wird zum einen ein umständliches Auflösen und Absaugen der ersten Komponente überflüssig und zum anderen gibt es keine aus der ausgehärteten Schicht der zweiten Komponente herausragenden Faserenden, die abbrechen könnten.

Weiterhin entstehen durch das erfindungsgemäße Verfahren größere Freiheiten der Gestaltung des Hohlfasermoduls. Insbesondere können die Hohlfaserenden in einer ebenen Stirnfläche enden, die gegenüber dem benachbarten freien Ende des Modulgehäuses um einen vorgebbaren Abstand zurückgesetzt ist. Eine schwierige und aufwendige Innenbearbeitung ist dabei nicht notwendig. Auch können nachträglich ansetzbare Kappen einfacher ausgebildet sein.

Erfindungsgemäß werden bei dem Entfernen des Angussdeckels die Hohlfasern in der von der ersten Komponente und der zweiten Komponente gebildeten Grenzschicht durchtrennt. Die Stirnfläche der zweiten Komponente, die mit den Hohlfaserenden eine gemeinsame ebene Fläche bildet, muss dabei nicht mehr nachbearbeitet werden. Das Lumen der Hohlfasern ist ohne weitere Nachbearbeitung frei zugängig. Der Angussdeckel wird dabei in einer rotierend ziehenden Bewegung entfernt. Durch die Rotation werden die Hohlfaserenden der Grenzflächen, d.h. in der Stirnfläche der ausgehärteten Schicht der zweiten Komponente, abgeschert und durchtrennt und durch die ziehende Bewegung wird der Angussdeckel mit den in den Pfropfen der ersten Komponente eingebetteten Hohlfaserenden entfernt.

Bevorzugte Ausführungsformen sind Gegenstand der abhängigen Ansprüche.

Nach einer bevorzugten Ausführungsform der Erfindung wird zwischen dem zweiten und dem dritten Schritt das Modulgehäuse in einer Zentrifuge zentrifugiert. Nach einer weiteren bevorzugten Ausführungsform wird nach dem Verfestigen der ersten Komponente und vor dem Aushärten der zweiten Komponente das Modulgehäuse bevorzugt erneut zentrifugiert. Dadurch können in einer relativ kurzen Zeit von der ersten und der zweiten Komponente jeweils eine ebene Schicht gebildet werden.

Gemäß einer bevorzugten Ausführungsform der Erfindung wird vor dem ersten Schritt das Hohlfaserbündel mit einem Stützgewebe versehen. Dadurch lässt sich das Hohlfaserbündel leichter in das Modulgehäuse einsetzen. Vor dem ersten Schritt, d.h. vor dem Einsetzen des Hohlfaserbündels in das Modulgehäuse, wird das Hohlfaserbündel zweckmäßig auf eine vorgegebene Länge geschnitten.

Nach einer weiteren bevorzugten Ausführungsform der Erfindung werden als erste flüssige Komponente Silikon und als zweite flüssige Komponente Polyurethan in das Modulgehäuse eingefüllt. Silikon weist eine gewisse Elastizität auf und geht keine feste Verbindung mit dem ausgehärteten Polyurethan ein, so dass sich relativ einfach, d.h. ohne großen Kraftaufwand beim Rotieren des Angussdeckels, der Silikonpfropfen an der Grenzfläche zwischen der ersten Komponente und der zweiten Komponente löst, aber gleichzeitig die Hohlfaserenden abschert, wobei diese an der Grenzfläche zwischen der ersten und zweiten Komponente durchtrennt werden.

Bei einer anderen Ausführungsform der Erfindung werden als erste flüssige Komponente Silikon und als zweite flüssige Komponente ein Epoxid-Klebstoff in das Modulgehäuse eingefüllt. Alternativ können als erste flüssige Komponente ein Gemisch aus Silikon und Polyurethan im Mischungsverhältnis 1:1, 1:2 oder 1:3 und als zweite flüssige Komponente Polyurethan verwendet werden.

Insbesondere kann bei dem erfindungsgemäßen Verfahren die Position und Dicke der von der zweiten Komponente gebildeten und ausgehärteten Schicht variabel gestaltet werden.

Durch das erfindungsgemäße Verfahren können Hohlfasermodule bereitgestellt werden, in welchen die Hohlfaserenden und die den Hohlfaserenden zugewandte Stirnfläche der dichtenden Schicht eine gemeinsame Ebene bilden, in der das Lumen der Hohlfasern frei zugängig ist, und in welchen die Stirnfläche der dichtenden Schicht gegenüber der Stirnfläche des benachbarten freien Endes des Modulgehäuses um einen vorgebbaren Abstand zurückgesetzt ist.

Dadurch, dass die Hohlfaserenden und die den Hohlfaserenden zugewandte Stirnfläche der dichtenden Schicht der zweiten Komponente eine gemeinsame Ebene bilden, in der das Lumen der Hohlfasern frei zugängig ist, kann auf eine Nachbearbeitung zum Öffnen der Hohlfaserenden verzichtet werden. Zudem gibt es keine freien, aus der dichtenden Schicht herausragenden Enden, die abbrechen könnten. Dadurch, dass die Stirnfläche gegenüber dem benachbarten freien Ende des Modulgehäuses um einen vorgebbaren Abstand zurückgesetzt ist, kann das Hohlfasermodul relativ universell eingesetzt werden. Der durch die zurückgesetzte Stirnfläche entstehende Raum kann für andere Zwecke genutzt werden, da er von keinen freiliegenden Hohlfaserenden blockiert wird.

Durch das erfindungsgemäße Verfahren können Hohlfasermodule mit einem Modulgehäuse bereitgestellt werden, welches als ein festes Kunststoffgehäuse ausgebildet ist. Dabei können beispielsweise verschiedene Anschlüsse oder Endkappen aufgeschweißt oder angeklebt werden.

Das Modulgehäuse kann auch als ein flexibler Schlauch ausgebildet sein. Durch die Ausbildung als flexibler Schlauch kann das freie Ende des Modulgehäuses direkt mit einem Schlauchanschluss, der z.B. als eine Schlaucholive ausgebildet ist, verbunden werden.

Weiterhin betrifft die Erfindung eine Kappe mit den Merkmalen des Oberbegriffs des Anspruchs 7 zur Verwendung als Angussdeckel in einem Verfahren zur Herstellung eines Hohlfasermoduls nach einem der Ansprüche 1 bis 6, wobei der Angussdeckel einen umlaufenden Bund aufweist, der auf seiner dem Hohlfaserbündel zugewandten Innenfläche eine Profilierung oder Widerstandselemente aufweist. Bevorzugt, weil einfacher in der Herstellung, ist der Zufluss in der Stirnwandung des Angussdeckels angeordnet.

Erfindungsgemäß weist der umlaufende Bund auf seiner dem Hohlfaserbündel zugewandten Innenfläche eine Profilierung oder Widerstandselemente auf. Die Profilierung bzw. die Widerstandselemente bilden mit der der Kappe zugeführten ersten Komponente nach deren Verfestigung eine formschlüssige Verbindung, so dass sich der in dem Angussdeckel gebildete Pfropfen nicht gegenüber dem Angussdeckel verdrehen kann. Damit wird sichergestellt, dass beim Rotieren, also einer Verdrehung des Deckels, auch tatsächlich die Faserenden abgeschert werden.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine Seitenansicht eines Hohlfasermoduls im Schnitt und Ausriss;
- Figur 2:: eine Seitenansicht im Schnitt und Ausriss eines Hohlfasermoduls mit aufgesteckter Kappe, noch ohne flüssige Komponenten;
- Figur 3:: eine Seitenansicht im Schnitt und Ausriss des Hohlfasermoduls von Figur 2 mit eingefüllter erster Komponente;
- Figur 4:: eine Seitenansicht im Schnitt und Ausriss des Hohlfasermoduls von Figur 3 mit eingefüllter zweiter Komponente;
- Figur 5:: eine Seitenansicht im Schnitt und Ausriss des Hohlfasermoduls von Figur 4 mit herausgezogenen Angussdeckel einschl. eines Pfropfens aus erster Komponente und abgescherten Hohlfaserenden;
- Figur 6:: eine Seitenansicht im Schnitt und Ausriss eines weiteren Hohlfasermoduls, das auf einen Schlauchanschluss aufgesteckt ist;
- Figur 7:: eine Draufsicht auf eine als Angussdeckel ausgebildete Kappe mit Bund und einer eine Profilierung aufweisenden Innenfläche;
- Figur 8:: eine Draufsicht auf eine weitere als Angussdeckel ausgebildete Kappe mit Bund und einer Widerstandselemente aufweisenden Innenfläche;
- Figur 9:: eine Draufsicht auf eine weitere als Angussdeckel ausgebildete Kappe mit Bund und einer Widerstandselemente aufweisenden Innenfläche und
- Figur 10:: eine Seitenansicht im Schnitt der Kappe von Figur 8 entlang der Linie X-X geschnitten.

### Beschreibung bevorzugter Ausführungsformen

Ein Hohlfasermodul 1 besteht im Wesentlichen aus einem Modulgehäuse 2, einem Hohlfaserbündel 3 und einer zweiten Komponente 4.

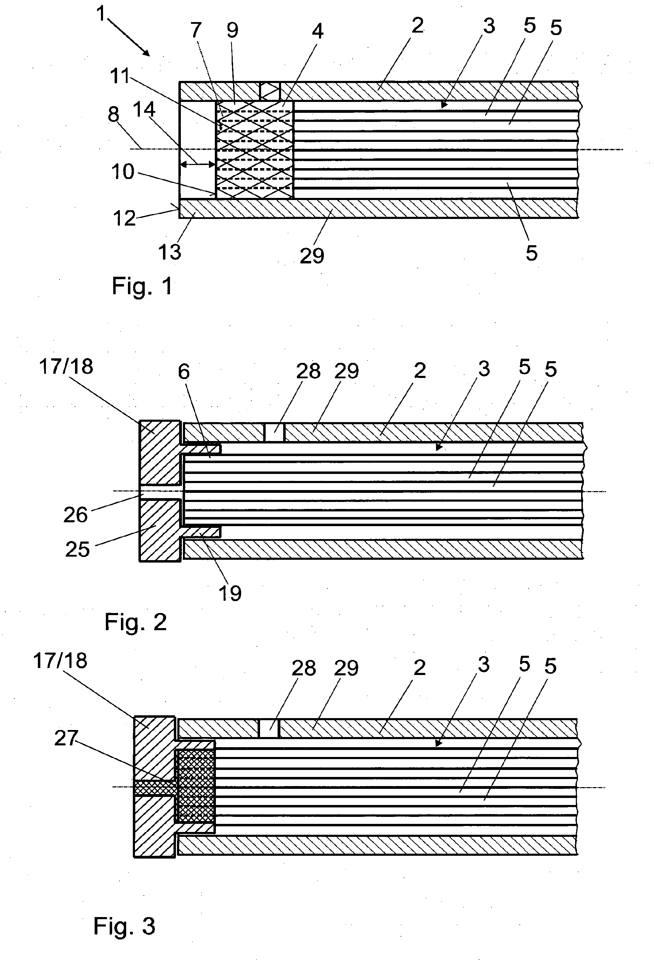

Entsprechend den Ausführungsbeispielen der Figuren 1 bis 5 ist das Modulgehäuse 2 als ein relativ starrer Kunststoffzylinder ausgebildet.

Das Hohlfaserbündel besteht aus einer Mehrzahl von Hohlfasern 5 mit Hohlfaserenden 6 im Ausgangszustand und Hohlfaserenden 7 im Fertigzustand.

Die zweite Komponente 4 bildet quer zur Längsachse 8 des Hohlfasermoduls 1 eine Schicht 9, die im ausgehärteten Zustand die Hohlfaserenden 7 einbettet und das Hohlfaserbündel 3 gegenüber dem Modulgehäuse 2 abdichtet. Im Fertigzustand weist die Schicht 9 eine Stirnfläche 10 auf, die mit den Hohlfaserenden 7 eine gemeinsame Ebene bildet, in der das Lumen 11 der Hohlfasern 5 frei zugängig ist. Die Stirnfläche 10 der Schicht 9 ist gegenüber der ringförmigen Stirnfläche 12 des freien Endes 13 des Modulgehäuses 2 um einen Abstand 14 zurückgesetzt.

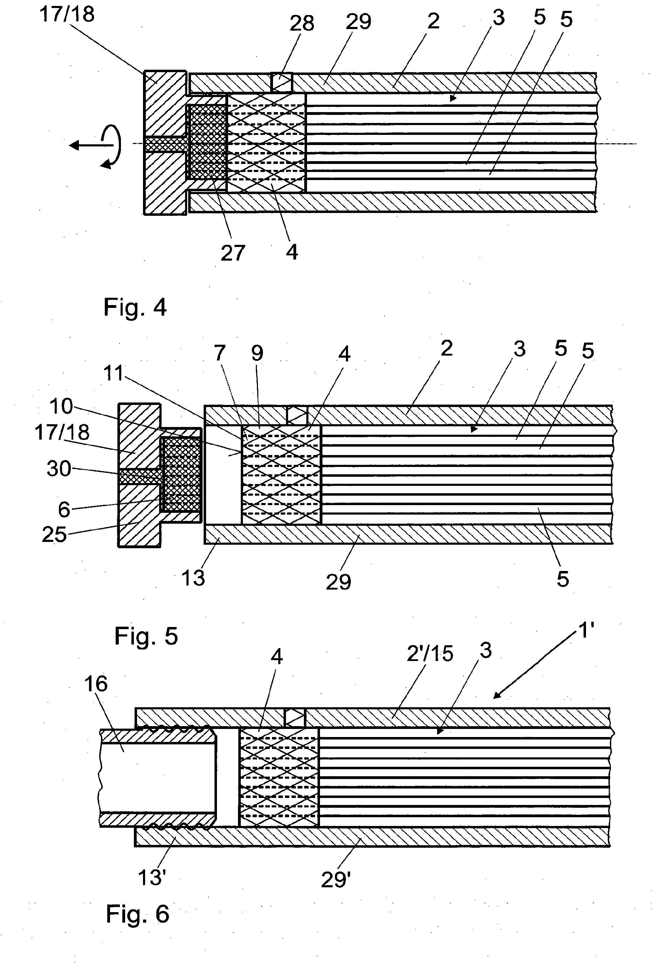

Gemäß der Figur 6 ist das Modulgehäuse 2' als ein flexibler Schlauch 15 ausgebildet. Das freie Ende 13' des Modulgehäuses 2' kann entsprechend Figur 6 direkt mit einem Schlauchanschluss 16 verbunden werden.

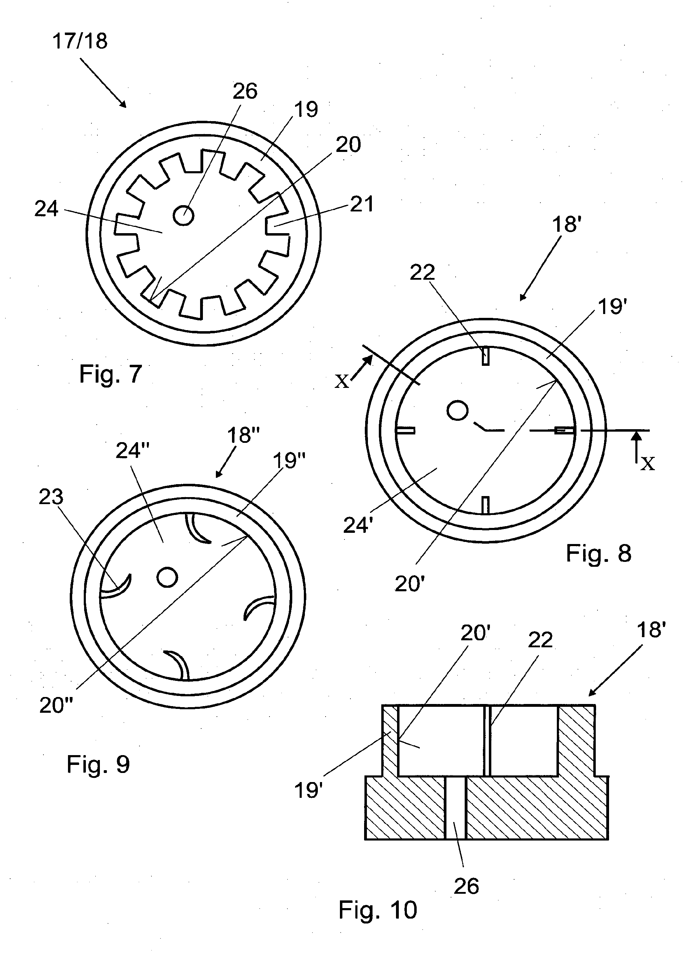

Zur Herstellung eines Hohlfasermoduls 1, 1' wird in einem ersten Schritt das Hohlfaserbündel 3 in das Modulgehäuse 2, 2' eingesetzt. Zur leichteren Einführbarkeit kann das Hohlfaserbündel 3 mit einem nicht weiter dargestellten Stützgewebe versehen werden. An seinem freien Ende 13, 13' wird das Modulgehäuse 2, 2' durch eine Kappe 17, die als ein entfernbarer Angussdeckel 18 ausgebildet ist, verschlossen. Der Angussdeckel 18 weist einen umlaufenden Bund 19 auf, der in das freie Ende 13 des Modulgehäuses 2 so einsteckbar ist, dass er die freien Hohlfaserenden 6 aufnimmt und das Hohlfaserbündel 3 mit seiner Innenfläche 20 umschließt. Der Bund 19 des Angussdeckels 18 kann auf seiner Innenfläche 20, die einen Innenraum 24 umschließt, eine Profilierung 21 (siehe Figur 7) aufweisen. Entsprechend den Figuren 8 und 10 kann der Angussdeckel 18' an seiner Innenfläche 20', die den Hohlraum 24' umschließt, auch Widerstandselemente 22 in Form von radialen Rippen aufweisen. Entsprechend Figur 9 kann der Angussdeckel 18" an der Innenfläche 20" des Bundes 19", die den Innenraum 24" umschließt, Widerstandselemente 23 aufweisen, die bogenförmig in den Innenraum 24" hineinragen. Der Angussdeckel 18, 18', 18" weist an seinem dem Hohlfaserbündel 3 abgewandten Ende des Bundes 19, 19', 19" eine Stirnwandung 25 auf. In der Stirnwandung 25 ist ein erster Zufluss 26 für eine erste Komponente 27 angeordnet.

Nachdem das Modulgehäuse 2 an seinem freien Ende durch die Kappe 17 verschlossen wurde, wird in einem zweiten Schritt die flüssige erste Komponente 27 über den ersten Zufluss 26 der Kappe 17 bzw. des Angussdeckels 18 in einen zwischen den Hohlfaserenden 6 und der Kappe 17 angeordneten Zwischenraum eingefüllt, wobei die Hohlfaserenden 6 in die erste Komponente 27 eintauchen (siehe Figur 3). Gegebenenfalls kann vor dem nachfolgenden dritten Schritt und vor dem Verfestigen der ersten Komponente 27 das Modulgehäuse 2 mit eingesetztem Hohlfaserbündel 3, Angussdeckel 18 und eingefüllter erster Komponente 27 in einer nicht dargestellten Zentrifuge zentrifugiert werden. In einem dritten Schritt wird die flüssige zweite Komponente 4 über einen im Modulgehäuse 2 angeordneten zweiten Zufluss 28 (siehe Figur 4) zugeführt. Gegebenenfalls wird nach dem Verfestigen der ersten Komponente 27 vor dem Aushärten der zweiten Komponente 4 das Modulgehäuse 2 mit dem Hohlfaserbündel 3 und der Kappe 7 erneut zentrifugiert. Im ausgehärteten Zustand bildet die zweite Komponente 4 die Schicht 9, die das Hohlfaserbündel 3 einbettet und gegenüber der benachbarten Modulgehäusewandung 29 abdichtet.

Nach dem Aushärten der zweiten Komponente 4 wird der Angussdeckel 18 einschließlich der einen verfestigten Pfropfen 30 bildenden ersten Komponente 27 mit in dem Pfropfen 30 eingebetteten Hohlfaserenden 6, die aus der Stirnfläche 10 der von der zweiten Komponente 4 gebildeten Schicht 9 herausragen, entfernt. Das Entfernen des Angussdeckels erfolgt in einer rotierend ziehenden Bewegung. Durch die rotierende Bewegung werden die Hohlfaserenden 6 abgeschert und der Angussdeckel 18 kann mit dem Pfropfen 30 und den eingebetteten Hohlfaserenden 6 herausgezogen werden.
Entsprechend den Ausführungsbeispielen wird als erste flüssige Komponente 27 Silikon und als zweite flüssige Komponente 4 Polyurethan in das Modulgehäuse 2 eingefüllt. Bei einer anderen, nicht dargestellten Ausführungsform der Erfindung werden als erste flüssige Komponente Silikon und als zweite flüssige Komponente ein Epoxid-Klebstoff in das Modulgehäuse eingefüllt. Alternativ können als erste flüssige Komponente ein Gemisch aus Silikon und Polyurethan im Mischungsverhältnis 1:1, 1:2 oder 1:3 und als zweite flüssige Komponente Polyurethan verwendet werden.
Natürlich stellen die in der speziellen Beschreibung diskutierten und in den Figuren gezeigten Ausführungsformen nur illustrative Ausführungsbeispiele der vorliegenden Erfindung dar.

### Bezugszeichenliste

- 1, 1': Hohlfasermodul
- 2, 2': Modulgehäuse
- 3: Hohlfaserbündel
- 4: zweite Komponente
- 5: Hohlfasermodul
- 6: Hohlfaserende (Ausgangszustand)
- 7: Hohlfaserende (Fertigzustand)
- 8: Längsachse von 1
- 9: Schicht von 4
- 10: Stirnfläche von 9
- 11: Lumen von 5
- 12: Stirnfläche von 2
- 13, 13': freies Ende von 2/15
- 14: Abstand
- 15: Schlauch von 2
- 16: Schlauchanschluss
- 17: Kappe
- 18, 18', 18": Angussdeckel
- 19, 19', 19": Bund von 18
- 20, 20', 20": Innenfläche von 19
- 21: Profilierung
- 22: Widerstandselemente
- 23: Widerstandselemente
- 24, 24', 24": Innenraum
- 25: Stirnwandung
- 26: erster Zufluss
- 27: erste Komponente
- 28: zweiter Zufluss von 2
- 29: Modulgehäusewandung von 2
- 30: Pfropfen von 27

## Patentansprüche

1. Verfahren zur Herstellung eines Hohlfasermoduls (1, 1'), bei dem in einem ersten Schritt ein Hohlfaserbündel (3) in ein Modulgehäuse (2, 2') eingesetzt und mindestens ein Ende des Modulgehäuses (2, 2') durch eine Kappe (17) verschlossen wird, bei dem in einem zweiten Schritt eine einen Abstandshalter bildende flüssige erste Komponente (27), die einen festen Zustand einnehmen kann, über einen ersten Zufluss (26) in einen zwischen den Hohlfaserenden (6, 7) und der Kappe (17) angeordneten Zwischenraum eingefüllt wird, wobei die Hohlfaserenden (6, 7) in die erste Komponente (27) eintauchen, und bei dem in einem dritten Schritt eine flüssige, aushärtbare zweite Komponente (4) der ersten Komponente (27) von der Kappe (17) weggerichtet über einen zweiten Zufluss (28) vorgelagert wird, wobei die zweite Komponente (4) im ausgehärteten Zustand eine dichtende Schicht (9) bildet, die das Hohlfaserbündel (3) einbettet und gegenüber der benachbarten Modulgehäusewandung (29, 29') abdichtet,
**dadurch gekennzeichnet,**
- **dass** die Kappe (17) als ein entfernbarer Angussdeckel (18, 18', 18") ausgebildet ist mit einem umlaufenden Bund (19, 19', 19"), der in ein freies Ende (13, 13') des Modulgehäuses (2, 2') einsetzbar ist und der im eingesetztem Zustand die freien Hohlfaserenden (6) des Hohlfaserbündels (3) aufnimmt,
wobei der Bund (19, 19', 19") an seinem dem Hohlfaserbündel (3) abgewandten Ende durch eine Stirnwandung (25) verschlossen ist,
wobei der Angussdeckel (18, 18', 18") den ersten Zufluss (26) für die erste flüssige Komponente (27) aufweist und
wobei der umlaufende Bund (19, 19', 19") auf seiner dem Hohlfaserbündel (3) zugewandten Innenfläche (20, 20', 20") eine Profilierung (21) oder Widerstandselemente (22, 23) aufweist,
welche mit der ersten Komponente (27) nach deren Verfestigung eine formschlüssige Verbindung bildet bzw. bilden, so dass sich ein in dem Angussdeckel gebildeter Pfropfen (30) nicht gegenüber dem Angussdeckel (18, 18', 18") verdrehen kann,
und
- **dass** nach dem Aushärten der zweiten Komponente (4) die Kappe (17), einschließlich der den verfestigten Pfropfen (30) bildenden ersten Komponente (27) und den in dem Pfropfen (30) eingebetteten Hohlfaserenden (6), die aus der Stirnfläche (10) der von der zweiten Komponente (4) gebildeten Schicht (9) herausragen, in einer rotierend ziehenden Bewegung aus dem Modulgehäuse (2, 2') entfernt wird, wobei bei dem Entfernen des Angussdeckels (18, 18', 18") die Hohlfasern (5) in der von der ersten Komponente (27) und der zweiten Komponente (4) gebildeten Grenzschicht durchtrennt werden.

2. Verfahren nach Anspruch 1,
**dadurch gekennzeichnet,**
**dass** zwischen dem zweiten und dem dritten Schritt das Modulgehäuse (2, 2') in einer Zentrifuge zentrifugiert wird.

3. Verfahren nach Anspruch 2,
**dadurch gekennzeichnet,**
**dass** nach dem Verfestigen der ersten Komponente (27) und vor dem Aushärten der zweiten Komponente (4) das Modulgehäuse (2, 2') erneut zentrifugiert wird.

4. Verfahren nach einem der Ansprüche 1 bis 3,
**dadurch gekennzeichnet,**
**dass** vor dem ersten Schritt das Hohlfaserbündel (3) mit einem Stützgewebe versehen wird.

5. Verfahren nach einem der Ansprüche 1 bis 3,
**dadurch gekennzeichnet,**
**dass** vor dem ersten Schritt das Hohlfaserbündel (3) auf eine vorgegebene Länge geschnitten wird.

6. Verfahren nach einem der Ansprüche 1 bis 5,
**dadurch gekennzeichnet,**
**dass** als erste flüssige Komponente (27) Silikon und als zweite flüssige Komponente (4) Polyurethan in das Modulgehäuse (2, 2') eingefüllt werden.

7. Kappe (17) zur Verwendung als Angussdeckel (18, 18', 18") in einem Verfahren nach einem der Ansprüche 1 bis 6,
wobei der Angussdeckel (18, 18', 18") einen umlaufenden Bund (19, 19', 19") aufweist, der in das freie Ende (13, 13') des Modulgehäuses (2, 2') einsetzbar ist und der im eingesetztem Zustand die freien Hohlfaserenden (6) des Hohlfaserbündels (3) aufnimmt,
wobei der Bund (19, 19', 19") an seinem dem Hohlfaserbündel (3) abgewandten Ende durch eine Stirnwandung (25) verschlossen ist und
wobei der Angussdeckel (18, 18', 18") einen ersten Zufluss (26) für eine erste flüssige Komponente (27) aufweist,
**dadurch gekennzeichnet,**
**dass** der umlaufende Bund (19, 19', 19") auf seiner dem Hohlfaserbündel (3) zugewandten Innenfläche (20, 20', 20") eine Profilierung (21) oder Widerstandselemente (22, 23) aufweist zur Bildung einer formschlüssigen Verbindung mit der ersten Komponente (27) nach deren Verfestigung, so dass sich ein in dem Angussdeckel gebildeter Pfropfen (30) nicht gegenüber dem Angussdeckel (18, 18', 18") verdrehen kann.

## Claims

1. Method for producing a hollow fibre module (1, 1'), in which in a first step a hollow fibre bundle (3) is inserted into a module housing (2, 2') and at least one end of the module housing (2, 2') is closed by a cap (17), in which in a second step a liquid first component (27), which forms a spacer and which can adopt a solid state, is introduced via first inlet (26) into an intermediate space arranged between the hollow fibre ends (6, 7) and the cap (17), wherein the hollow fibre ends (6, 7) enter the first component (27), and in which in a third step a liquid, hardenable second component (4) is deposited, directed away from the cap (17), in front of the first component (27) via a second inlet (28), wherein the second component (4) in the hardened state forms a sealing layer (9) which embeds the hollow fibre bundle (3) and seals it relative to the adjacent module housing wall (29, 29'), **characterised in that**
- the cap (17) is constructed as a removable sprue cover (18, 18', 18") with an encircling collar (19, 19', 19"), which is insertable into a free end (13, 13') of the module housing (2, 2') and which in the inserted state receives the free hollow fibre ends (6) of the hollow fibre bundle (3),
wherein the collar (19, 19', 19") is closed by an end wall (25) at the end thereof remote from the hollow fibre bundle (3)
wherein the sprue cover (18, 18', 18") has the first inlet (26) for the first liquid component (27) and
wherein the encircling collar (19, 19', 19") has on the inner surface (20, 20', 20") thereof facing the hollow fibre bundle (3) a profiling (21) or resistance elements (22, 23),
which forms or form together with the first component (27) after solidification thereof a mechanically positive connection so that a plug (30) formed in the sprue cover cannot rotate relative to the sprue cover (18, 18', 18"), and
- after hardening of the second component (4) the cap (17) inclusive of the first component (27) forming the solidified plug (30) and the hollow fibre ends (6), which are embedded in the plug (30) and protrude from the end surface (10) of the layer (9) formed by the second component (4), is removed from the module housing (2, 2') in a rotating, pulling motion, wherein when the sprue cover (18, 18', 18") is removed the hollow fibres (5) in the boundary layer formed by the first component (27) and the second component (4) are severed.

2. Method according to claim 1, **characterised in that** between the second and third steps the module housing (2, 2') is centrifuged in a centrifuge.

3. Method according to claim 2, **characterised in that** after solidification of the first component (27) and prior to the hardening of the second component (4) the module housing (2, 2') is centrifuged again.

4. Method according to any one of claims 1 to 3, **characterised in that** the hollow fibre bundle (3) is provided with a support fabric prior to the first step.

5. Method according to any one of claims 1 to 3, **characterised in that** the hollow fibre bundle (3) is cut to a predetermined length prior to the first step.

6. Method according to any one of claims 1 to 5, **characterised in that** silicon is introduced into the module housing (2, 2') as first liquid component (27) and polyurethane is introduced into the module housing (2, 2') as second liquid component (4).

7. Cap (17) for use as a sprue cover (18, 18', 18") in a method according to any one of claims 1 to 6,
wherein the sprue cover (18, 18', 18") has an encircling collar (19, 19', 19"), which is insertable into the free end (13, 13') of the module housing (2, 2') and which in the inserted state receives the free hollow fibre ends (6) of the hollow fibre bundle (3),
wherein the collar (19, 19', 19") is closed by an end wall (25) at the end thereof remote from the hollow fibre bundle (3) and
wherein the sprue cover (18, 18', 18") has a first inlet (26) for a first liquid component (27), **characterised in that**
the encircling collar (19, 19', 19") has on the inner surface (20, 20', 20") thereof facing the hollow fibre bundle (3) a profiling (21) or resistance elements (22, 23) for formation of a mechanically positive connection with the first component (27) after solidification thereof so that a plug (30) formed in the sprue cover cannot rotate relative to the sprue cover (18, 18', 18").

## Revendications

1. Procédé de fabrication d'un module à fibres creuses (1, 1'), selon lequel, au cours d'une première étape, un faisceau de fibres creuses (3) est inséré dans un boîtier de module (2, 2') et au moins une extrémité du boîtier de module (2, 2') est fermée par un capuchon (17), selon lequel, au cours d'une deuxième étape, un premier composant liquide (27) qui forme un espaceur et qui peut prendre un état solide remplit un espace intermédiaire agencé entre les extrémités de fibres creuses (6, 7) et le capuchon (17) par l'intermédiaire d'une première arrivée (26), dans lequel les extrémités de fibres creuses (6, 7) s'enfoncent dans le premier composant (27), et selon lequel, au cours d'une troisième étape, un deuxième composant liquide (4) durcissable est déposé en amont du premier composant (27) à distance du capuchon (17) par l'intermédiaire d'une deuxième arrivée (28), dans lequel le deuxième composant (4), une fois durci, forme une couche d'étanchéité (9) qui enrobe le faisceau de fibres creuses (3) et l'étanchéifie par rapport à la paroi voisine de boîtier de module (29, 29'),
**caractérisé**
- **en ce que** le capuchon (17) est réalisé sous la forme d'un couvercle de coulée (18, 18', 18'') amovible comprenant un rebord périphérique (19, 19', 19'') qui peut être inséré dans une extrémité libre (13, 13') du boîtier de module (2, 2') et qui, une fois inséré, reçoit les extrémités de fibres creuses (6) libres du faisceau de fibres creuses (3),
dans lequel le rebord (19, 19', 19") est fermé à son extrémité opposée au faisceau de fibres creuses (3) par une paroi frontale (25),
dans lequel le couvercle de coulée (18, 18', 18'') comprend la première arrivée (26) pour le premier composant liquide (27) et
dans lequel le rebord périphérique (19, 19', 19'') présente sur sa surface intérieure (20, 20', 20'') tournée vers le faisceau de fibres creuses (3) un profilage (21) ou des éléments de résistance (22, 23),
lequel ou lesquels forme ou forment avec le premier composant (27), une fois celui-ci durci, une liaison par coopération de formes, de sorte qu'un bouchon (30) formé dans le couvercle de coulée ne peut pas être amené en rotation par rapport au couvercle de coulée (18, 18', 18'')
et
- **en ce que**, une fois le deuxième composant (4) durci, le capuchon (17), y compris le premier composant (27) formant le bouchon (30) solidifié et les extrémités de fibres creuses (6) enrobées dans le bouchon (30), qui font saillie de la surface frontale (10) de la couche (9) formée par le deuxième composant (4), est retiré du boîtier de module (2, 2') au cours d'un mouvement de traction en rotation, les fibres creuses (5), lors du retrait du couvercle de coulée (18, 18', 18''), étant sectionnées dans la couche limite formée par le premier composant (27) et le deuxième composant (4).

2. Procédé selon la revendication 1,
**caractérisé**
**en ce que** le boîtier de module (2, 2') est centrifugé dans une centrifugeuse entre la deuxième et la troisième étape.

3. Procédé selon la revendication 2,
**caractérisé**
**en ce que**, une fois le premier composant (27) solidifié et avant le durcissement du deuxième composant (4), le boîtier de module (2, 2') est à nouveau centrifugé.

4. Procédé selon l'une quelconque des revendications 1 à 3,
**caractérisé**
**en ce que**, avant la première étape, le faisceau de fibres creuses (3) est pourvu d'un tissu de support.

5. Procédé selon l'une quelconque des revendications 1 à 3,
**caractérisé**
**en ce que**, avant la première étape, le faisceau de fibres creuses (3) est coupé à une longueur prédéfinie.

6. Procédé selon l'une quelconque des revendications 1 à 5,
**caractérisé**
**en ce que** du silicone, en tant que premier composant liquide (27), et du polyuréthane, en tant que deuxième composant liquide (4), remplissent le boîtier de module (2, 2').

7. Capuchon (17) destiné à être utilisé comme couvercle de coulée (18, 18', 18") dans un procédé selon l'une quelconque des revendications 1 à 6,
dans lequel le couvercle de coulée (18, 18', 18'') comprend un rebord périphérique (19, 19', 19'') qui peut être inséré dans l'extrémité libre (13, 13') du boîtier de module (2, 2') et qui, une fois inséré, reçoit les extrémités de fibres creuses (6) libres du faisceau de fibres creuses (3),
dans lequel le rebord (19, 19', 19'') est fermé à son extrémité opposée au faisceau de fibres creuses (3) par une paroi frontale (25) et
dans lequel le couvercle de coulée (18, 18', 18'') comprend une première arrivée (26) pour un premier composant liquide (27),
**caractérisé**
**en ce que** le rebord périphérique (19, 19', 19'') présente sur sa surface intérieure (20, 20', 20'') tournée vers le faisceau de fibres creuses (3) un profilage (21) ou des éléments de résistance (22, 23) pour la formation d'une liaison par coopération de formes avec le premier composant (27) une fois celui-ci solidifié, de sorte qu'un bouchon (30) formé dans le couvercle de coulée ne peut pas être amené en rotation par rapport au couvercle de coulée (18, 18', 18'').
